**Europäisches Patentamt**

**European Patent Office**

**Office européen des brevets**

(11) Numéro de publication : **0 344 057 B1**

## (12) FASCICULE DE BREVET EUROPEEN

(45) Date de publication du fascicule du brevet :
24.06.92 Bulletin 92/26

(51) Int. Cl.$^5$ : **B62B 9/08**

(21) Numéro de dépôt : **89401406.7**

(22) Date de dépôt : **24.05.89**

(54) **Dispositif de freinage de roue, en particulier pour voiture d'enfant.**

(30) Priorité : **26.05.88 FR 8807012**

(43) Date de publication de la demande :
**29.11.89 Bulletin 89/48**

(45) Mention de la délivrance du brevet :
**24.06.92 Bulletin 92/26**

(84) Etats contractants désignés :
**AT BE CH DE ES FR GB GR IT LI LU NL SE**

(56) Documents cités :
**EP-A- 0 064 368**
**GB-A- 823 372**
**GB-A- 2 197 042**

(73) Titulaire : **AMPAFRANCE S.A.**
**119, Rue de Paris**
**F-92107 Boulogne-Billancourt Cedex (FR)**

(72) Inventeur : **Bigo, Jean**
**74, rue Maindron**
**F-49300 Cholet (FR)**

(74) Mandataire : **Casalonga, Axel et al**
**BUREAU D.A. CASALONGA - JOSSE**
**Morassistrasse 8**
**W-8000 München 5 (DE)**

EP 0 344 057 B1

## Description

La présente invention est relative à un dispositif de freinage pouvant être utilisé en particulier pour des voitures d'enfants, capable de freiner ou d'immobiliser la voiture d'enfant en agissant sur au moins l'une de ses roues.

On connaît déjà des dispositifs de freinage dans lesquels on provoque le déplacement axial par rapport à la roue d'un élément de blocage qui vient s'insérer entre deux rayons ou agit sur le moyeu de la roue. (Voir par exemple : le brevet français FR 84 12 509 - Ampafrance; le brevet US 4 116 464 - Haley). Dans d'autres dispositifs, l'élément de blocage, qui agit de la même manière est déplacé sensiblement radialement (voir par exemple : demande de brevet allemand DE 2 351 435 - Mueller; demande de brevet européen EP 64 368 - Kirk-dyson); et GB-A- 21 97042. Ces dispositifs ne donnent pas entièrement satisfaction en raison des efforts qui s'exercent sur les pièces du dispositif de freinage et sur les rayons ou le moyeu de la roue qui entraînent des risques d'usure ou même de rupture. De plus le freinage obtenu n'entraîne pas une immobilisation complète de la roue qui peut encore tourner par rapport au doigt de blocage d'un angle correspondant à celui qui subsiste entre deux rayons adjacents du moyeu de la roue.

Dans d'autres dispositifs de freinage de type connu on agit radialement sur le bandage de la roue en utilisant la souplesse de ce bandage. (Voir par exemple le brevet français 85 02 374 - Ampafrance). Bien que ces dispositifs donnent généralement satisfaction lorsque la roue est neuve, on constate néanmoins une diminution d'efficacité du dispositif de freinage au fur et à mesure de l'usure du bandage de la roue.

La présente invention a pour objet une voiture avec un dispositif de freinage qui supprime ces inconvénients, dont l'efficacité soit indépendante de l'usure des bandages de roue et qui soit capable, de par sa structure même d'assurer une immobilisation totale et précise de la roue.

L'invention a également pour objet dans un mode de réalisation préféré, de permettre une action simultanée sur les deux roues d'un même essieu, améliorant ainsi considérablement l'efficacité du freinage.

La voiture avec, en particulier voiture d'enfant, selon l'invention comprend un châssis monté par l'intermédiaire d'un organe de liaison du type suspension ou directement sur au moins un essieu à une paire de roues. Le dispositif de freinage comprend un élément de freinage actionné par une pédale de frein et capable de freiner la rotation d'au moins l'une des roues. Selon l'invention, la pédale de frein est montée fixe en rotation sur l'essieu. L'organe de liaison comprend deux éléments de suspension chacun monté au voisinage d'une roue autour d'un excentrique solidaire de l'essieu, chaque élément de suspension comportant un organe de freinage. Chaque roue comporte un tambour de frein solidaire de la roue et capable de coopérer par sa périphérie avec l'organe de freinage correspondant lorsque l'essieu est entraîné en rotation dans un premier sens par action sur la pédale de frein, provoquant ainsi le rapprochement et l'entrée en contact de l'organe de freinage avec la périphérie du tambour de frein.

Dans un mode de réalisation préféré de l'invention, les deux éléments de suspension sont montés de la même manière autour d'un excentrique solidaire de l'essieu et les deux roues comportent un tambour de frein de sorte que la rotation de l'essieu entraîné par la pédale de frein provoque un effet de freinage sur les deux roues simultanément par coopération entre les organes de freinage respectifs des deux éléments de suspension avec la périphérie des tambours de frein des deux roues.

La pédale de frein est de préférence solidaire d'une pédale de dégagement, capable lorsqu'elle est actionnée, d'entraîner l'essieu en rotation dans un deuxième sens provoquant ainsi l'écartement de l'organe de freinage et la libération de la roue équipée du tambour de frein.

Comme précédemment, si les deux roues sont équipées de tambours de frein, l'action sur la pédale de dégagement libère simultanément les deux roues.

L'organe de freinage peut être un simple patin de serrage venant en contact sensiblement radial avec la périphérie d'un tambour de frein de surface sensiblement lisse. L'effet de freinage est alors assuré par le contact de frottement entre le patin de serrage et la périphérie du tambour de frein.

Dans un mode de réalisation préféré cependant, le tambour de frein présente une pluralité de dents sur sa périphérie, lesquelles correspondent à des dents pratiquées sur la surface de l'organe de freinage. On obtient ainsi une immobilisation effective en rotation de la roue équipée du tambour de frein.

Il est avantageux de disposer l'organe de freinage de façon qu'il se trouve sensiblement sous l'essieu. De cette manière, une action sur le châssis, par exemple pour le franchissement d'un trottoir ou d'un obstacle analogue, a tendance à écarter les organes de freinage des tambours de frein, ne risquant pas ainsi d'entraîner un effet de freinage non désiré.

Le dispositif comprend en outre de préférence des moyens d'indexation élastiques capables de maintenir l'essieu dans les positions respectives de freinage et de libération des roues. Dans un mode de réalisation préféré, ces moyens d'indexation élastiques peuvent être constitués par un doigt souple d'indexation solidaire de l'élément de suspension et capable de se déplacer dans une gorge d'indexation incurvée pratiquée dans la pédale de frein qui est alors montée à proximité de l'une des roues. Cette gorge incurvée présente à ses deux extrémités un dégagement dans lequel le doigt souple peut pénétrer lors des rotations de la pédale afin d'immobiliser cette dernière dans l'une ou l'autre des positions de freinage ou de libération. La pédale de frein étant solidaire de l'essieu, il en résulte une immobilisation de l'ensemble du dispositif de freinage dans l'une de ces positions.

Dans le mode de réalisation préféré où un dispositif de freinage est prévu sur chacune des roues de l'essieu, un manchon d'indexation présentant une gorge d'indexation incurvée munie des mêmes dégagements à ses deux extrémités est monté à proximité de l'autre roue de façon à coopérer avec un doigt souple d'indexation solidaire de l'élément de suspension de la roue considérée. Ce doigt d'indexation peut alors se déplacer dans la gorge d'indexation du manchon en pénétrant dans les dégagements de la gorge d'indexation lors des rotations de l'essieu commandées par la pédale.

Dans un mode de réalisation préféré de l'invention, chaque élément de suspension comprend une lame souple flexible supportant un élément de châssis au voisinage d'une extrémité et entourant l'excentrique monté sur l'essieu au voisinage de son autre extrémité. L'extrémité supérieure de la lame flexible est capable d'entrer en contact avec un élément monté sur l'essieu de façon à durcir la suspension à partir de cette position de contact. On obtient ainsi une suspension de structure particulièrement simple et fournissant deux effets différenciés de suspension.

L'intégration de l'organe de freinage dans l'élément de suspension lui-même par exemple sous la forme d'une pièce en matière plastique moulée permet une réalisation particulièrement simple et efficace du dispositif de freinage et de la suspension.

L'invention sera mieux comprise à la description détaillée d'un mode de réalisation particulier pris à titre d'exemple nullement limitatif et illustré par les dessins annexés sur lesquels :

la figure 1 est une vue schématique partielle de l'essieu arrière d'une poussette d'enfant comportant un dispositif de freinage sur les deux roues, dans la position de freinage;

la figure 2 est une vue en coupe selon II-II de la figure 1 montrant donc, vus de côté et en position de freinage, les différents éléments du dispositif de freinage;

la figure 3 est une vue analogue à la figure 2 illustrant cependant la position de libération ainsi que les mouvements possibles de la suspension;

la figure 4 est une vue selon IV-IV de la figure 1 montrant donc, vus de côté, les différents éléments du dispositif de freinage sur l'autre roue et en position de freinage.

Tel qu'il est illustré sur les figures, le dispositif de freinage est adapté à une voiture d'enfant dont on aperçoit sur les figures l'extrémité inférieure de deux éléments de châssis 1a, 1b. Sur l'essieu arrière 2, sont montées, en vue de leur rotation libre, les deux roues arrière 3a et 3b. La liaison entre les éléments de châssis 1a et 1b et l'essieu 2 se fait par l'intermédiaire de deux éléments de suspension 4a, 4b de structure identique.

D'une manière générale on affectera dans la présente description et sur les dessins les indices a et b respectivement à des pièces identiques se trouvant de chaque côté de l'essieu 2 à proximité de l'une ou l'autre des roues 3a et 3b. La description sera donc faite en référence au dispositif de freinage de l'une des roues, l'autre dispositif de freinage étant identique, sauf mention particulière. On notera en outre que, si dans l'exemple illustré la poussette ne comporte de chaque côté qu'une roue 3a ou 3b on pourrait parfaitement imaginer appliquer de la même manière le dispositif de freinage à une paire d'organes de roulement munis chacun de deux roues montées côte à côte en vue de leur rotation à chacune des extrémités de l'essieu 2.

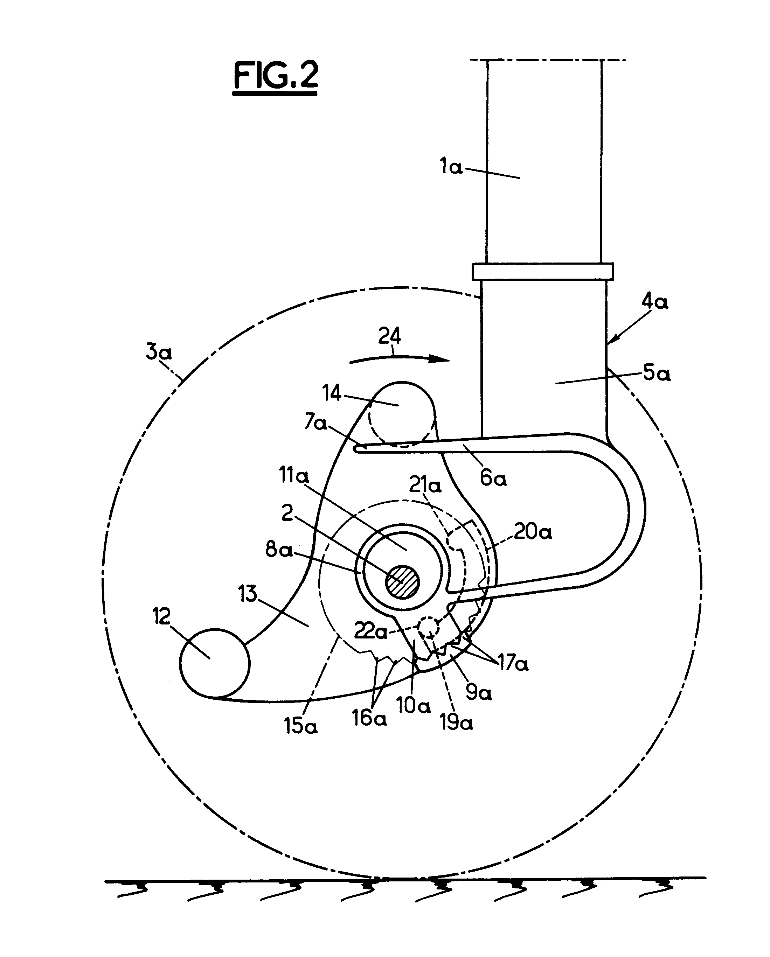

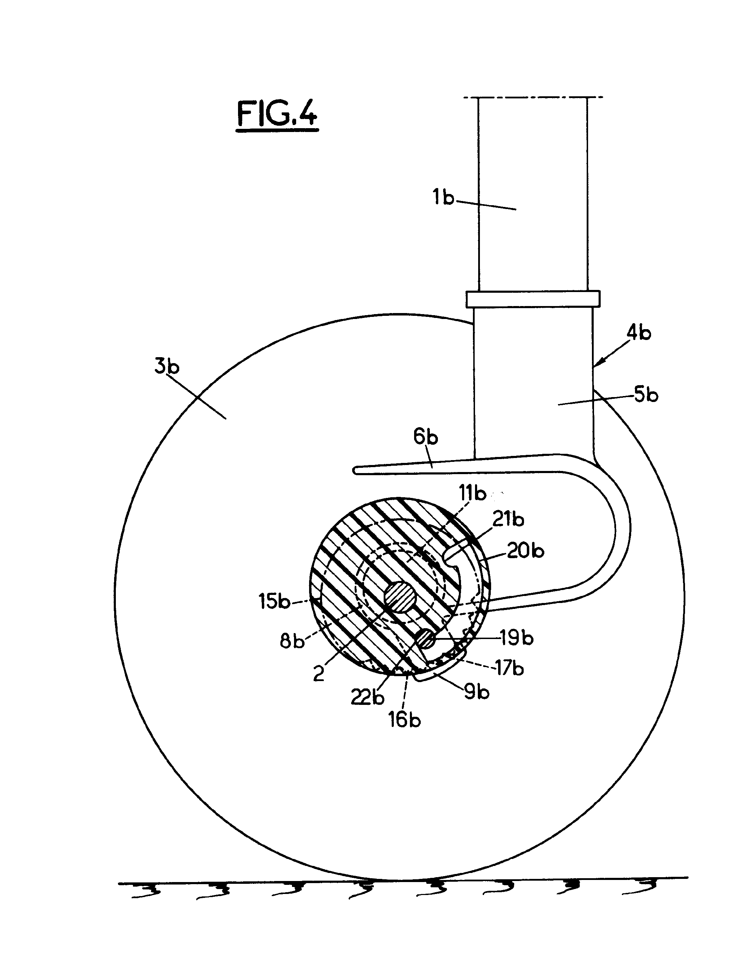

Comme on peut le voir en particulier sur les figures 2 à 4 l'organe de suspension 4a, symétrique de l'organe de suspension 4b, comporte un manchon vertical 5a qui reçoit l'extrémité de l'élément de châssis 1a d'axe vertical. Le manchon 5a est solidaire d'une lame souple flexible 6a en forme de U présentant une extrémité supérieure libre 7a et, à son extrémité inférieure opposée, une douille cylindrique d'axe horizontal 8a ainsi qu'un organe de freinage en forme de patin 9a situé sensiblement en dessous de l'axe de la douille 8a à l'extrémité d'un montant radial 10a, légèrement incliné dans l'exemple illustré en direction de l'axe du manchon 5a.

La douille 8a est montée en vue de sa rotation libre sur un excentrique 11a solidaire en rotation de l'essieu 2.

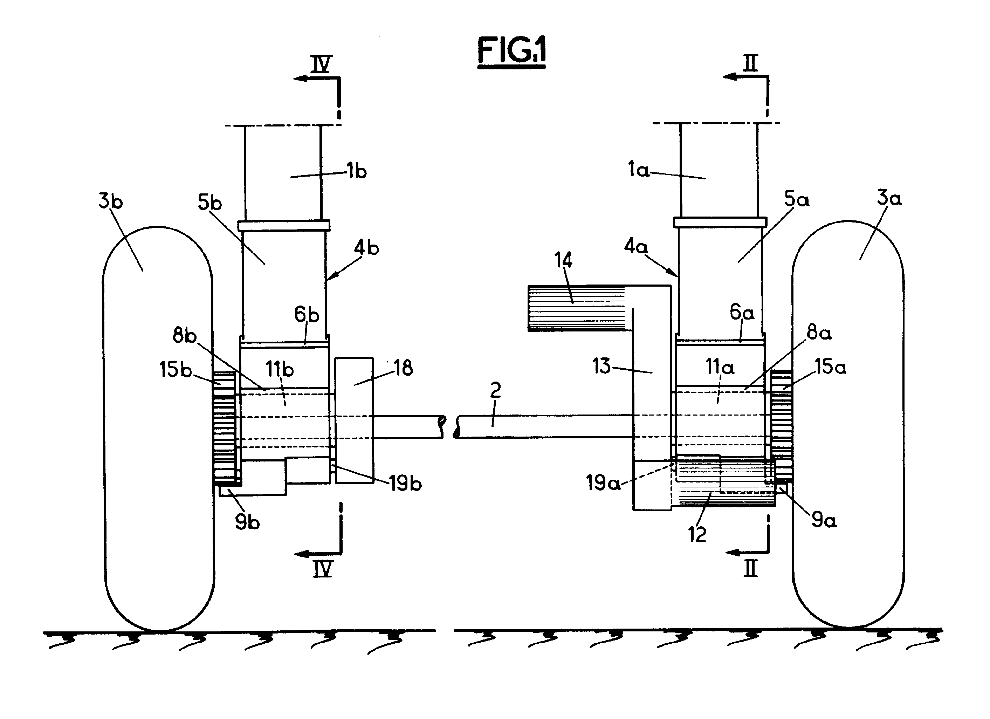

Une pédale de frein 12 est solidaire d'une pièce d'actionnement 13 portant à son extrémité opposée une pédale de dégagement 14. Comme on peut le voir mieux sur la figure 1, dans l'exemple illustré, la pédale de frein 12 s'étend parallèlement à l'essieu 2 en direction de la roue 3a tandis que la pédale de dégagement 14 qui s'étend également parallèlement à l'essieu 2 est dirigée vers la roue opposée 3b. La pièce d'actionnement 13 en forme de flasque est placée au voisinage immédiat de l'élément de suspension 4a et est solidaire de l'excentrique 11a. On peut avantageusement réaliser en matière plastique moulée d'une seule pièce, la pièce d'actionnement 13 présentant les deux pédales 12 et 14 et l'excentrique 11a qui peut être rendu solidaire de l'essieu 2 par montage à force, collage ou tout autre moyen équivalent.

Chaque roue 3a, 3b comporte un tambour de frein 15a, 15b de forme générale cylindrique concentrique à la roue correspondante 3a, 3b et donc à l'essieu 2. La périphérie de chaque tambour de frein 15a, 15b présente une pluralité de dents axiales 16a visibles sur les figures 2 à 4. Ces dents 16a, 16b sont de même profil que des dents 17a, 17b prévues sur la surface interne de l'organe de freinage 9a, 9b solidaire de chaque élément de suspension 4a, 4b.

Du côté de la roue 3b et de l'élément de suspension 4b, qui ne comporte pas l'élément d'actionnement 13 équipé des deux pédales 12 et 14, l'excentrique 11b est solidaire d'un manchon d'indexation 18 fixe en rotation par rapport à l'essieu 2.

Chaque élément de suspension 4a, 4b présente un doigt souple d'indexation 19a, 19b d'axe parallèle à l'essieu 2 disposé sur l'élément de suspension correspondant 4a, 4b à l'opposé de l'organe de freinage 9a, 9b lequel fait également saillie axialement vers l'extérieur parallèlement à l'axe de l'essieu 2 de façon à coopérer avec le tambour de frein correspondant 15a, 15b comme on peut le voir sur la figure 1.

Chaque doigt souple d'indexation 19a, 19b coopère avec une gorge d'indexation incurvée 20a, 20b qui est pratiquée sur la surface en regard de l'élément d'actionnement 13 et respectivement du manchon d'indexation 18. Chaque gorge incurvée d'indexation 20a, 20b est centrée au centre géométrique de l'excentrique correspondant 11a, 11b ou, ce qui revient au même, au centre de la douille 8a, 8b de l'élément de suspension 4a, 4b. Chaque gorge d'indexation 20a, 20b présente à ses deux extrémités un dégagement 21a, 21b et 22a, 22b, ces dégagements étant dans l'exemple illustré, dirigés radialement vers l'intérieur et de forme telle qu'ils puissent recevoir les doigts d'indexation 19a, 19b afin de définir les positions respectives de freinage et de libération.

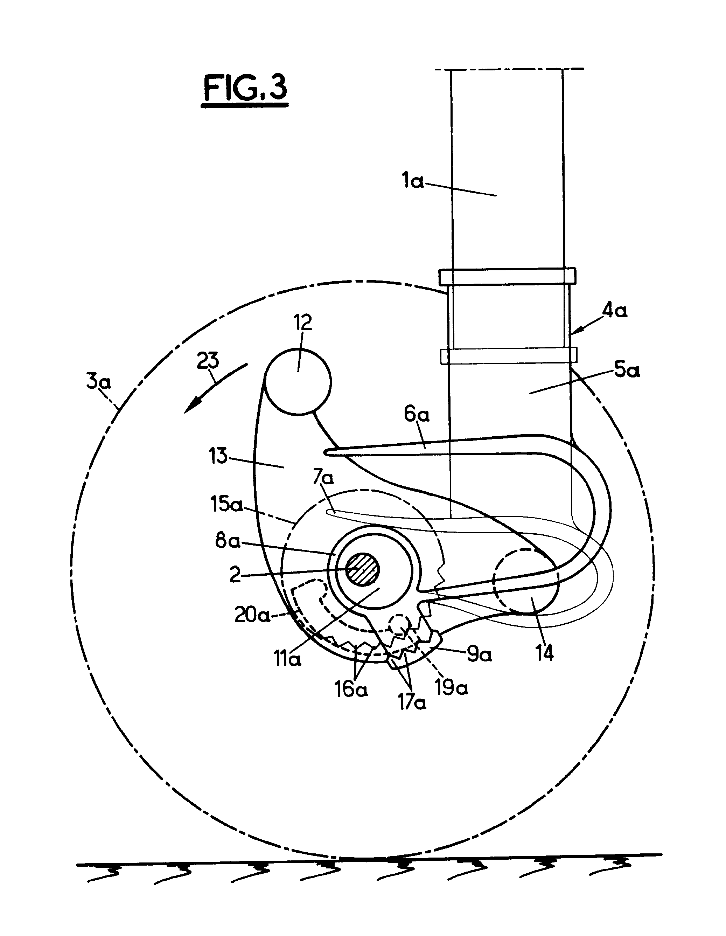

On va maintenant décrire, en se référant aux figures, le fonctionnement du dispositif de freinage, en partant de la position libérée illustrée sur la figure 3 où la pédale de freinage 12 se trouve en position haute tandis que la pédale de dégagement 14 est en position basse. Comme on peut le voir sur la figure 3, dans cette position, l'excentrique 11a provoque un écartement important entre l'organe de freinage 9a et l'essieu 2. Les dents 17a de l'organe de freinage 9a se trouvent donc dégagées avec un certain écartement des dents 16a de la périphérie du tambour de frein 15a qui est concentrique à l'essieu 2 puisqu'il est solidaire de la roue 3a. La pièce d'actionnement 13 est maintenue dans cette position de libération en raison du fait que le doigt d'indexation souple 19a est logé dans le dégagement d'extrémité 21a de la gorge incurvée d'indexation 20a. On notera que grâce à la position de l'organe de freinage 9a sensiblement en dessous de l'essieu 2, toute action d'écrasement sur le châssis de la poussette a tendance à écarter l'organe de freinage 9a de la périphérie du tambour de frein 15a ce qui permet d'éviter tout risque de freinage intempestif lors du passage d'un obstacle.

On notera que, dans cette position, l'organe de freinage 9b solidaire de l'élément de suspension 4b est également dégagé du tambour de frein 15b et maintenu dans cette position grâce au doigt d'indexation 19b dans le dégagement correspondant 21b de la gorge d'indexation 20b du manchon d'indexation 18. Dans cette position libérée, la poussette peut donc être déplacée, les roues 3a, 3b roulant librement sur le sol autour de l'essieu 2 qui reste immobile.

Pour passer de cette position libre à la position de freinage, on agit, de préférence avec le pied, sur la pédale 12 pour faire tourner la pièce d'actionnement 13 dans le sens de la flèche 23 de la figure 3. Au début de ce mouvement, il convient de vaincre une légère résistance due à l'encliquetage des doigts d'indexation 19a, 19b dans les dégagements respectifs 21a, 21b. La poursuite de la poussée sur la pédale de frein 12 provoque la rotation de la pièce d'actionnement 13, laquelle entraîne en rotation l'essieu 2 et par voie de conséquence les deux excentriques 11a, 11b qui sont solidaires en rotation de l'essieu 2. Lors de ce mouvement de rotation les deux doigts d'indexation souples 19a, 19b subissent une légère flexion élastique et frottent le long du bord interne des gorges d'indexation incurvées 20a, 20b pratiquées respectivement sur la pièce d'actionnement 13 et sur le manchon d'indexation 18, ces gorges se déplaçant en rotation en même temps que la pièce 13 et le manchon 18.

La fin du mouvement de rotation est illustrée sur la figure 2 qui représente la position de freinage. Avant de parvenir à cette position, les deux excentriques 11a et 11b ont subi une rotation de l'ordre de 90° qui a provoqué un déplacement vers le haut et vers la gauche par rapport à la figure 2 des organes de freinage 9a, 9b entraînés par leurs éléments de suspension respectifs 4a, 4b on notera que ce déplacement est de faible amplitude de sorte qu'il n'est pas sensible sur le châssis de la poussette lui-même. Ce mouvement a permis le rapprochement de l'organe de freinage 9a, 9b jusqu'au contact et à l'engrènement des dents 17a, 17b avec les dents 16a, 16b dont sont munis les deux tambours de frein 15a, 15b. Dans la position de freinage illustrée sur la figure 2 on constate effectivement que l'écartement entre l'organe de freinage 9a et l'essieu 2 est pratiquement minimum compte tenu de la position de l'excentrique 11a. Il en résulte l'engrènement qui vient d'être indiqué entre l'organe de freinage 9a et le tambour de frein 15a centré sur l'essieu 2, entraînant de ce fait le blocage de la roue 3a. Cette opération étant provoquée par la rotation de l'essieu 2, on comprend que le même effet est obtenu pour la roue 3b par la coopération entre l'organe de freinage 9b et le tambour de frein 15b. Dans la position de freinage illustrée sur la figure 2, le doigt d'indexation 19a est venu s'encliqueter élastiquement dans le deuxième dégagement 22a de la gorge incurvée d'indexation 20a.

On comprendra que pour débloquer les roues à partir de la position illustrée sur la figure 2 il suffit d'agir, toujours de préférence avec le pied, sur la pédale de dégagement 14 qui est en position accessible comme on le voit sur la figure 2, en poussant celle-ci dans le sens de la flèche 24 sur la figure 2 jusqu'à atteindre la position illustrée sur la figure 3. On notera que, dans la position de freinage illustrée sur la figure 2, la pédale de frein 12 se trouve légèrement au-dessous du niveau de l'essieu 2 tandis que la pédale de dégagement 14 est pratiquement à la verticale au-dessus de l'essieu 2. Dans la position libérée illustrée sur la figure 3 la pédale de dégagement 14 est pratiquement au même niveau horizontal que l'essieu 2, devant celui-ci, et la pédale de frein 12 est sensiblement au-dessus de l'essieu 2. Le choix de ces différentes positions permet de faciliter la commande au pied de la pièce d'actionnement 13.

En définitive, l'invention permet, par une simple action de rotation de l'essieu, de commander directement le freinage sur l'une des roues ou, de préférence, sur les deux roues de la poussette.

Le fonctionnement de la suspension 4a est schématiquement illustré sur la figure 3 en trait fin. Lorsque le châssis exerce une action de poussée vers le bas sur la suspension 4a, la lame mince en U 6a se déforme en générant une force antagoniste qui définit la dureté de la suspension. Lorsque l'extrémité libre 7a de la lame 6a entre en contact avec la douille 8a comme illustré en trait fin sur la figure 3, la déformation de la lame souple 6a se poursuit par une portion d'extrémité de plus faible dimension, augmentant ainsi la dureté de la suspension dans cette deuxième phase de déformation. On notera que l'axe du manchon 5a reste pratiquement vertical.

Bien que la description ait été faite en se fondant sur une poussette pour enfant, on comprendra bien entendu que l'invention s'appliquerait aisément au freinage d'une roue quelconque, qu'il s'agisse d'un chariot de transport de marchandises, d'un fauteuil roulant ou de tout autre structure montée sur roues.

De plus, bien que le châssis de la poussette décrite ait été monté sur l'essieu par l'intermédiaire d'une suspension, on comprendra que le châssis pourrait également être monté directement sur l'essieu par l'intermédiaire de l'excentrique décrit.

**Revendications**

1. Voiture avec en particulier voiture d'enfant, comprenant un châssis monté par l'intermédiaire d'un organe de liaison du type suspension ou directement sur au moins un essieu (2) commun à une paire de roues (3a, 3b) et un élément de freinage actionné par une pédale de frein et capable de freiner la rotation d'au moins une roue, caractérisé par le fait que la pédale de frein (12, 13) est montée fixe en rotation sur l'essieu (2), que l'organe de liaison comprend deux éléments de suspension (4a, 4b) l'un au moins étant monté au voisinage d'une roue (3a) autour d'un excentrique (11a) solidaire de l'essieu (2), chaque élément de suspension (4a) comportant un organe de freinage (9a); et qu'au moins une roue (3a) comporte un tambour de frein (15a) solidaire de la roue, capable de coopérer par sa périphérie avec l'organe de freinage correspondant lorsque l'essieu est entraîné en rotation dans un premier sens par action sur la pédale de frein (12), provoquant ainsi le rapprochement et l'entrée en contact de l'organe de freinage (9a) avec la périphérie du tambour de frein (15a).

2. Voiture suivant la revendication 1, caractérisé par le fait que les deux éléments de suspension (4a, 4b) comportent chacun un organe de freinage (9a, 9b) chaque roue étant munie d'un tambour de frein (15a, 15b), chaque élément de suspension étant monté autour d'un excentrique (11a, 11b) solidaire de l'essieu (2) de façon que la rotation de l'essieu par l'action de la pédale de frein provoque le freinage des deux roues simultanément.

3. Voiture selon les revendications 1 ou 2, caractérisé par le fait que la pédale de frein (12) est solidaire d'une pédale de dégagement (14) capable lorsqu'elle est actionnée, d'entraîner l'essieu (2) en rotation dans un deuxième sens provoquant ainsi l'écartement de l'organe de freinage et la libération de la roue équipée du tambour de frein.

4. Voiture selon l'une quelconque des revendications précédentes, caractérisé par le fait que l'organe de freinage est un patin de serrage venant en contact sensiblement radial avec la périphérie du tambour de frein.

5. Voiture selon l'une quelconque des revendications précédentes 1 à 3, caractérisé par le fait que la périphérie du tambour de frein présente une pluralité de dents (16a, 16b) correspondant à des dents (17a, 17b) pratiquées sur la surface de l'organe de freinage (9a, 9b).

6. Voiture selon l'une quelconque des revendications précédentes, caractérisé par le fait que l'organe de freinage est monté de façon à se trouver sensiblement sous l'essieu.

7. Voiture selon l'une quelconque des revendications précédentes, caractérisé par le fait qu'il présente des moyens d'indexation capables de le maintenir dans les positions respectives de freinage et de libération.

8. Voiture selon la revendication 7, caractérisé par le fait que la pédale de frein (12) est solidaire d'une pièce d'actionnement (13) montée à proximité d'une des roues et présentant une gorge d'indexation incurvée (20a) munie de dégagements (21a, 22a) à ses deux extrémités et qu'un doigt souple d'indexation (19a) solidaire de l'élément de suspension (4a) pénètre dans la gorge d'indexation lors de la rotation de cette dernière et peut venir se loger élastiquement dans les dégagements lors de la rotation de la pièce d'actionnement (13).

9. Voiture selon la revendication 7 ou 8, caractérisé par le fait qu'il comprend un manchon d'indexation (18) présentant une gorge d'indexation incurvée (20b) munie de dégagements (21b, 22b) à ses deux extrémités, le manchon d'indexation étant monté à proximité de l'autre roue (36) de façon à coopérer avec un doigt souple d'indexation (19b) solidaire de l'élément de suspension (4b) capable de pénétrer dans la gorge d'indexation et de venir se loger dans les dégagements lors des rotations de l'essieu (2).

10. Voiture selon l'une quelconque des revendications précédentes, caractérisé par le fait que chaque élément de suspension (4a, 4b) comprend une lame courbe flexible (6a, 6b) supportant un élément de châssis au voisinage d'une extrémité et entourant l'excentrique (11a, 1b) au voisinage de son autre extrémité.

11. Voiture selon la revendication 10, caractérisé par le fait que l'extrémité supérieure de la lame (6a) est capable d'entrer en contact avec un élément monté sur l'essieu (2) pour durcir la suspension à partir de cette position.

**Patentansprüche**

1. Wagen mit Radbremse, insbesondere Kinderwagen, mit einem Fahrgestell, das über ein Verbindungsorgan der Bauart Aufhängung oder unmittelbar auf wenigstens einer Welle (2), die für ein Paar von Rädern (3a, 3b) gemeinsam ist, montiert ist, und mit einem Bremselement, das über ein Bremspedal betätigt wird und das die Drehung von wenigstens einem Rad bremsen kann, dadurch gekennzeichnet, daß das Bremspedal (12, 13) drehfest auf der Welle (2) montiert ist, daß das Verbindungsorgan (2) zwei Aufhängungselemente (4a, 4b) aufweist, von welchen wenigstens eines in der Nähe eines Rades (3a) um einen Exzenter (11a) montiert ist, der mit der Welle (2) verbunden ist, wobei jedes Aufhängungselement (4a) ein Bremsorgan (9a) aufweist, und daß wenigstens ein Rad (3a) eine Bremsscheibe (15a) aufweist, die mit dem Rad verbunden ist und die über ihren Umfang mit dem entsprechenden Bremsorgan zusammenwirken kann, wenn die Welle in einer ersten Richtung durch Einwirken auf das Bremspedal (12) verdreht wird und so das Annähern des Bremsorganes (9a) an den bzw. das Anliegen desselben am Umfang der Bremsscheibe (15a) bewirkt.

2. Wagen nach Anspruch 1, dadurch gekennzeichnet, daß die zwei Aufhängungselemente (4a, 4b) jeweils ein Bremsorgan (9a, 9b) aufweisen, wobei jedes Rad mit einer Bremsscheibe (15a, 15b) ausgestattet ist, wobei jedes Aufhängungselement um einen Exzenter (11a, 11b) montiert ist, der mit der Welle (2) verbunden ist, so daß das Verdrehen der Welle unter der Wirkung des Bremspedales gleichzeitig das Bremsen der beiden Räder auslöst.

3. Wagen nach den Ansprüchen 1 oder 2, dadurch gekennzeichnet, daß das Bremspedal (12) mit einem Freigabepedal (14) verbunden ist, das bei seiner Betätigung die Welle (2) in einer zweiten Richtung verdrehen kann, welche das Entfernen des Bremsorganes und damit die Freigabe des mit der Bremsscheibe ausgestatteten Rades auslöst.

4. Wagen nach einem der vorhergehenden Ansprüche, dadurch gekennzeichnet, daß das Bremsorgan ein Klemmschuh ist, der mit dem Umfang der Bremstrommel im wesentlichen radial in Berührung gelangt.

5. Wagen nach einem der vorhergehenden Ansprüche 1 bis 3, dadurch gekennzeichnet, daß der Umfang der Bremsscheibe mehrere Zähne (16a, 16b) aufweist, die Zähnen (17a, 17b) entsprechen, die auf der Fläche des Bremsorganes (9a, 9b) angeordnet sind.

6. Wagen nach einem der vorhergehenden Ansprüche, dadurch gekennzeichnet, daß das Bremsorgan so montiert ist, daß es sich im wesentlichen unter der Welle befindet.

7. Wagen nach einem der vorhergehenden Ansprüche, dadurch gekennzeichnet, daß er Indexmittel aufweist, die ihn in der Bremsbzw. in der Freigabestellung halten können.

8. Wagen nach Anspruch 7, dadurch gekennzeichnet, daß das Bremspedal (12) mit einem Betätigungsteil (13) verbunden ist, der in der Nähe eines der Räder montiert ist, und der eine gekrümmte Indexnut (20a) aufweist, die an ihren beiden Enden mit Vertiefungen (21a, 22a) ausgestattet ist, und daß ein weicher Indexstift (19a), der mit dem Aufhängungselement (4a) verbunden ist, in die Indexnut während dem Verdrehen der letzteren ragt und der elastisch in die Ausnehmungen während der Verdrehung des Betätigungsteiles (13) elastisch einrasten kann.

9. Wagen nach Anspruch 7 oder 8, dadurch gekennzeichnet, daß er eine Indexhülse (18) aufweist, die eine gekrümmte Indexnut (20b), die mit Vertiefungen (21b, 22b) an ihren beiden Enden ausgestattet ist, aufweist, wobei die Indexhülse in der Nähe des anderen Rades (3b) so montiert ist, daß sie mit einem weichen Indexfinger (19b) zusammenwirkt, der mit dem Aufhängungselement (4b) verbunden ist und in die Indexnut ragen kann, und der beim Verdrehen der Welle (2) in die Ausnehmungen einrasten kann.

10. Wagen nach einem der vorhergehenden Ansprüche, dadurch gekennzeichnet, daß jedes Aufhängungselement (4a, 4b) eine gekrümmte, flexible Blattfeder (6a, 6b) aufweist, die in der Nähe eines Endes ein Element des Fahrgestells trägt und die in der Nähe ihres anderen Endes den Exzenter (11a, 11b) umgibt.

11. Wagen nach Anspruch 10, dadurch gekennzeichnet, daß das obere Ende der Blattfeder (6a) mit einem Element in Berührung-kommen kann, das auf der Welle (2) montiert ist, um die Aufhängung ausgehend von dieser Stellung härter zu machen.

## Claims

1. Vehicle with a wheel braking device, in particular perambulator, comprising a chassis mounted by means of a connecting member of the suspension type or directly on at least one axle (2) common to a pair of wheels (3a, 3b) and a braking element actuated by a brake pedal and capable of brakiny rotation of at least one wheel, characterised in that the brake pedal (12, 13) is mounted non-rotatably on the axle (2), that the connecting member comprises two suspension elements (4a, 4b), at least one being mounted in the vicinity of a wheel (3a) about a cam (11a) rigidly connected to the axle (2), each suspension element (4a) comprising a braking member (9a); and that at least one wheel (3a) comprises a brake drum (15a) rigidly connected to the wheel and capable of cooperating by its periphery with the corresponding braking member when the axle is driven in rotation in a first direction by action on the brake pedal (12), thus causing the braking member (9a) to approach and come into contact with the periphery of the brake drum (15a).

2. Vehicle according to claim 1, characterised in that the two suspension elements (4a, 4b) each comprise a braking member (9a, 9b), each wheel being provided with a brake drum (15a, 15b), each suspension element being mounted about a cam (11a, 11b) rigidly connected to the axle (2) so that rotation of the axle by the action of the brake pedal causes braking of the two wheels simultaneously.

3. Vehicle according to claim 1 or 2, characterised in that the brake pedal (12) is rigidly connected to a release pedal (14) capable when actuated of driving the axle (2) in rotation in a second direction, thus causing the braking member to move away and the wheel equipped with the brake drum to be released.

4. Vehicle according to any of the preceding claims, characterised in that the braking member is a locking shoe coming into approximately radial contact with the periphery of the brake drum.

5. Vehicle according to any of the preceding claims 1 to 3, characterised in that the periphery of the brake drum comprises a plurality of teeth (16a, 16b) corresponding to teeth (17a, 17b) formed on the surface of the braking member (9a, 9b).

6. Vehicle according to any of the preceding claims, characterised in that the braking member is mounted so as to be located approximately under the axle.

7. Vehicle according to any of the preceding claims, characterised in that it comprises indexing means capable of maintaining it in the respective braking and release positions.

8. Vehicle according to claim 7, characterised in that the brake pedal (12) is rigidly connected to an actuating component (13) mounted close to one of the wheels and comprising a curved indexing groove (20a) provided with undercut portions (21a, 22a) at its two ends and that a flexible indexing arm (19a) rigidly connected to the suspension element (4a) enters the indexing groove during rotation of the latter and can lodge elastically in the undercut portions during rotation of the actuating component (13).

9. Vehicle according to claim 7 or 8, characterised in that it comprises an indexing sleeve (18) comprising a curved indexing groove (20b) provided with undercut portions (21b, 22b) at its two ends, the indexing sleeve being mounted close to the other wheel (3b) so as to cooperate with a flexible indexing arm (19b) rigidly connected to the suspension element (4b) capable of entering the indexing groove and lodging in the undercut portions during the rotations of the axle (2).

10. Vehicle according to any of the preceding claims, characterised in that each suspension element (4a, 4b) comprises a curved, flexible blade (6a, 9b) supporting a chassis element in the vicinity of one end and surrounding the cam (11a, 11b) in the vicinity of its other end.

11. Vehicle according to claim 10, characterised in that the upper end of the blade (6a) is capable of coming into contact with an element mounted on the axle (2) in order to harden the suspension from this position.

# FIG.1

FIG.2

## FIG.3

FIG.4